# EUROPEAN PATENT APPLICATION

(11) **EP 3 454 157 A1**
(43) Date of publication of application: **13.03.2019**
(21) Application number: 17190207.5
(22) Date of filing: 08.09.2017
(51) Int. Cl.: G05D 1/00, G01C 11/02

(54) **METHOD AND UNMANNED AERIAL VEHICLE FOR ACQUIRING SENSOR DATA RELATED TO A WIND TURBINE**

(71) Applicant: Sulzer & Schmid Laboratories AG, 8618 Oetwil am See (CH)
(72) Inventor: Sulzer, Thomas, 8618 Oetwil am See (CH); Asikainen, Joonas, 8618 Oetwil am See (CH)
(74) Representative: Frei Patent Attorneys

(57) **Abstract**

A method for acquiring sensor data related to a wind turbine, using an unmanned aerial vehicle (UAV) (4) comprising at least one inspection sensor, which can be a camera (42), for acquiring the sensor data (71), comprises the steps of:
• determining a reference flight path (54a) for the UAV (4);
• operating the UAV (4) to automatically fly along an actual flight path (54b) derived from the reference flight path (54a),
• acquiring, as the UAV (4) flies along one or more sections of the actual flight path (54b), with the inspection sensor (42), multiple sets of sensor data (71),
• storing each set of sensor data (71) in association with sensor pose data (74) that defines the pose of the inspection sensor (42) at the time at which the set of sensor data (71) was acquired.

## Description

The invention relates to the field of plant inspection, and in particular to a method and an unmanned aerial vehicle for acquiring sensor data related to a wind turbine.

The wind-energy sector is in need of new inspection methods that can capture and document the condition of power plants, i.e. turbines, over time. Turbine blades typically are made of fibre-reinforced composites, with resins such as polyester and epoxy, and with glass and carbon fibers as the reinforcing material. Defects of the blades can be caused by the impact of objects, lightning, erosion by rain and hail, mechanical stress and flexing, aging, etc. Owners and operators should obtain full transparency with respect to the health of their assets. The detailed knowledge about defects and their propagation over time is the most important prerequisite for preventive maintenance and repair, which are known to unlock great cost savings. In addition, it facilitates compliance with legislation and with requirements by insurance companies. For this reason, rotor blades and wind-turbine towers have to be inspected periodically.

Such inspections are carried out manually by rope access teams. Highly trained inspection climbers visually identify defects over a blade surface of up to 500m² and record anomalies with handheld cameras. Current issues with traditional rope access inspection include: an aging plant population, requiring frequent inspections, increasing size of the turbines, with blades longer than 60 meters and towers higher than 100 meters, the inspection quality depends on the subjective judgement of the climbers, adverse weather conditions may limit the inspector's performance, damages can be detected by the rope team but full coverage and seamless digital documentation of the blade's health cannot be assured, reports are created mostly manually.

It is therefore an object of the invention to create a method and an unmanned aerial vehicle for acquiring sensor data related to a wind turbine of the type mentioned initially, which overcomes the disadvantages mentioned above.

These objects are achieved by a method and an unmanned aerial vehicle for acquiring sensor data related to a wind turbine according to the claims.

The method for acquiring sensor data related to a wind turbine, using an unmanned aerial vehicle (UAV) comprising at least one inspection sensor, which can be a camera, for acquiring the sensor data, comprises the steps of:
- determining a reference flight path for the UAV;
- operating the UAV to automatically fly along an actual flight path derived from the reference flight path,
- acquiring, as the UAV flies along one or more sections of the actual flight path, with the inspection sensor (or camera), multiple sets of sensor data,
- storing each set of sensor data in association with sensor pose data that defines the pose of the inspection sensor (or camera) at the time at which the set of sensor data was acquired.

This allows to define an inspection mission which comprises an inspection pattern with settings or reference data for the UAV, for inspection sensors (such as a camera) and for sensors for navigation, and which defines positions of the UAV at which sensor readings (such as images) are to be taken, and/or areas or points to be inspected or photographed.

Furthermore, this allows to store the sensor data, that is, each set of sensor data, in combination with sensor metadata. This combination shall be called **enhanced sensor data.** The sensor data can in particular be image data. The sensor metadata can in particular comprise sensor pose data. Pose data describes the pose of an object in 3D space, that is the combination of its *position* and *orientation.* Further sensor metadata can describe parameters of the inspection sensor related to the captured sensor data. For example, if the sensor is a camera, the sensor metadata can be exposure time, focus settings, etc.

In embodiments, storing each set of sensor data in association with sensor pose data comprises the steps of, during an inspection mission:
- storing each set of sensor data - for example, an image - with a timestamp;
- storing, at each point in time that an image is captured, the sensor pose data with a timestamp.

Any further metadata can be stored in the same manner. The different data can be stored in association with a mission identifier that uniquely identifies the inspection mission and permits to link the data to mission data that characterises the mission as a whole, such as an identity of the turbine, a model type of the turbine, its geographic location, its owner or operator, etc...

The reference flight path can be in terms of the trajectory and pose of the UAV or the trajectory and pose of the inspection sensor. The two are related by their relative position and the gimbal angles.

In embodiments, for operating the UAV to automatically fly along an actual flight path, the following step is performed:
- determining at least one of the pose of the UAV and the pose of the inspection sensor by integrating data from at least one of a satellite navigation system and an inertial navigation system with data from a distance sensor located on the UAV and a computer model of at least part of the turbine.

The UAV can thus comprise either an inertial sensor, or a satellite based system for providing measurement data of its pose, or both. A satellite navigation system is a system that uses satellites to provide autonomous geo-spatial positioning. Such a system can be the Global Positioning System (GPS), GLONASS, Galileo, BeiDou or another regional or national system. The distance sensor can be a laser scanner, lidar scanner, based on triangulation or time of flight measurement, an ultrasound scanner, etc. or a combination thereof.

In embodiments, the data from the distance sensor comprises an actual distance map comprising distance measurements at least in a plane intersecting the turbine, and the method comprises the steps of
- determining, from the computer model, a reference distance map comprising distances from the distance sensor to at least one of the tower and the blade according to the pose of the distance sensor within the computer model;
- correcting the pose of the distance sensor within the computer model according to a geometric transformation that matches the actual distance map to the reference distance map.

The effect of correcting the pose of the distance sensor (and/or the UAV) within the computer model to show their respective actual pose reflects the fact that now a corrected actual position of the distance sensor and UAV is known. This allows to correct inaccurate GPS (or other) position data by means of a comparison of distance measurements to the reference model. As a result, after the correction, the reference distance map re-computed with the corrected pose matches the actual distance map. Since the flight controller controls the actual flight path, the correct actual pose of the distance sensor and of the UAV typically gives rise to a correction in the actual flight path.

The computer model must thus not necessarily be a complete 3D model of the turbine, it can suffice if it allows to determine planar sections of the blade and/or the tower as seen from the UAV.

Correcting the pose of the distance sensor is equivalent to correcting the pose of the UAV within the computer model.

In embodiments, the blade is arranged with its tip in its lowermost position, closest to the ground.

In other words, the blade is rotated to point downward, essentially parallel to the tower (when seen in a plane normal to the axis of the rotor). Typically, the pitch of the rotor is adjusted such that the blade is aligned with the tower, with the leading edge of the blade pointing away from the tower and the trailing edge of the blade pointing towards the tower.

This shall be called a standard configuration for inspection. In this configuration, it is possible to measure, in the same plane, distances from the distance sensor to both the tower and the blade.

In other embodiments, the standard configuration can be with the rotor at other angles, e.g. with the blade pointing up or being horizontal.

In embodiments, the actual distance map comprises, in a horizontal plane, at least one of a distance from the distance sensor to the tower and a distance from the distance sensor to the blade, in particular in each case the minimum distance.

If these two distances are measured, then the actual position of the distance sensor (or, equivalently, of the UAV) in the plane can be computed by triangulation. The actual position in the plane is used to correct the position within the computer model. If only one can be measured, then the actual position can be corrected at least in the direction of the measurement.

In embodiments, the method comprises the step of
- determining the reference flight path by retrieving a parameterised generic flight path and setting its parameters to parameters of an actual turbine to be inspected.

This allows to quickly adapt a standard inspection procedure and flight path to an actual turbine. Typically, the actual turbine is arranged to be in the standard configuration for inspection.

In embodiments, the parameters define at least a root height, span and chord length of the blade, and optionally also a diameter of the tower and a (shortest) distance between the tower and the blade, an angle of the blade relative to the vertical, a pitch angle of the blade, and the nacelle angle.

The actual parameters do not necessarily have to be identical to the parameters listed above. It suffices if they provide equivalent information that allows to determine these parameters. For example, the height of the root of the blade above ground level can be determined by giving a height of the tip above ground and adding the span.

Typically, the parameterised model is for a turbine in the standard configuration for inspection.

In embodiments, the reference flight path comprises data defining at least one of a reference trajectory for the UAV and a reference trajectory for the inspection sensor, and reference data defining the orientation of the inspection sensor

In other words, the reference flight path can be defined either "directly" in terms of a trajectory of the pose of the inspection sensor over time, or "indirectly" in terms of a trajectory of the UAV together with the orientation of the inspection sensor along this trajectory.

In embodiments, the reference flight path comprises an initialisation section with a plausibility check, and the method comprises the steps of:
- flying the UAV to a height above the height of the tip;
- determining, with a distance sensor, an actual distance map comprising distance measurements at least in a (typically horizontal) plane intersecting the turbine;
- verifying whether one section of the actual distance map can be matched with the blade and another, separate section of the actual distance map can be matched with the tower, and that the relative arrangement of these two sections is as expected.

This allows to check for errors in setting up a variety of parameters that define the reference flight path in real space. For example, if there is an error, the UAV might approach the turbine from (seen from the front) e.g. the left side instead of the right side as desired. This would cause the distance sensor to observe, when scanning from left to right, first the tower, then an empty space (quasi infinite distance) and then the blade. However, the expectation is to observe first the blade, then empty space, then the tower. In the event of a mismatch, the mission can be aborted, before the UAV continues to operate under false initial conditions. Other errors that can be detected in this way are an incorrect horizontal orientation or location, which would, for example, cause the blade to be hidden behind the tower or cause the two to overlap. The tower can be identified in the distance measurements by having a round contour, the blade by being flat or curved along its chord lines. In the standard configuration for inspection the chord lines lie essentially in horizontal planes.

In embodiments, the reference flight path comprises a height calibration section, and the method comprises the steps of:
- flying the UAV to a height above the height of the tip;
- determining, with a distance sensor, an actual distance map comprising distance measurements at least in a (typically horizontal) plane intersecting at least the blade;
- verifying whether one section of the actual distance map can be matched with the blade;
- controlling the UAV to reduce its height, continuously repeating the steps of determining the actual distance map and verifying the presence of the blade until the blade is no longer detected, this indicating that UAV is in reality at the height of the tip;
- correcting a modelled height of the UAV within a computer model that comprises a pose of the UAV to correspond to the height of the tip.

This allows to calibrate the height of the UAV and thus of subsequent sections of the reference flight path, in accordance with the actual height of the tip. Any initial errors in ground height or GPS height readings etc. can thereby be reduced or eliminated.

According to further embodiments, the height of the UAV is corrected at other points as the UAV follows its flight path. This can be done based on the actual distance map, when other features of the blade and/or tower are observed, in particular features that cause discontinuities in the actual distance map and are located at a height that is represented in the model. For example, this can be the root of the blade. Alternatively, other sensors and related features can be used, such as the inspection sensor. For example, if the inspection sensor is a camera, markings or deviations that are at a known location on the blade can be used, together with information about the pose of the inspection sensor relative to the reference frame of the UAV, to correct its position.

In embodiments, the actual flight path is derived from the reference flight path by the steps of, repeatedly at points in time following each other:
- inputting (to a flight controller) the reference flight path, a reference relative position of the UAV in relation to the blade, and a measured relative position of the UAV in relation to the blade,
- (the flight controller) determining the actual flight path as a deviation from the reference flight path that reduces or eliminates a difference between the reference and the measured relative position of the UAV in relation to the blade.

This allows to correct the actual flight path in accordance with actual situation at hand. Otherwise, if the curvature of the blade or of a specific part of the blade, such as one of the edges, deviates from the curvature that is implicit in the reference flight path, without this correction the distance between the blade and the UAV and the inspection sensor would vary. With the correction, the UAV can, for example, follow the reference flight path with regard to vertical position and with regard to its orientation, but maintain the desired reference position with regard to horizontal position, in accordance with horizontal position measurements by the distance sensor.

The actual flight path can be determined by means of known optimisation procedures or control methods, such as a Kalman filter, Model Predictive Control (MPC), in particular Predictive Functional Control (PFC) methods etc.

When determining the actual flight path, the flight controller can modify the flight path to limit acceleration of the UAV to values that can be physically realised.

In embodiments, the reference and the measured relative position are one of
- a relative position in 3D space;
- a relative position in a (typically horizontal) plane, defined in the two dimensions spanned by the plane;
- a distance, such as the distance to the closest point on the blade, or to a distinctive point of the blade such as the leading edge or the trailing edge.

Where the relative position is defined in 3D space, deviations can be determined in accordance to the type of sensors that are available. If a 3D scanner can observe at least part of the turbine, its measurements can be used to determine the deviation.

Where the relative position is defined in a plane, or with regard to measurements made by a sensor in a plane, then this measurement plane typically lies at least approximately normal to the flight path, or to a section of the flight path in which this correction of the flight path is active. Thus, in a section of the flight path in which the UAV travels in a vertical direction - up or down - the measurement plane is horizontal.

This method can be applied in general to the inspection of objects other than blades of turbines. Then the reference relative position is defined in relation to such an object to be inspected.

In embodiments, the method comprises the step of:
- controlling an orientation of the inspection sensor to centre its field of view on a section of the blade being inspected, in particular by controlling a horizontal orientation (yaw) of the inspection sensor.

This allows to, for example, frame images taken by a camera to show the blade at least approximately centred in the image. In particular, with the turbine in the standard configuration for inspection, and the blade thus pointing down from the rotor, a vertical section of the blade will be observed by the inspection sensor or camera and should be horizontally centred within the image. The orientation can be controlled by rotating the UAV as a whole. Alternatively or in addition, it can be controlled by the gimbal carrying the inspection sensor, in particular by controlling the yaw angle of the gimbal. The gimbal can also be used to control the pitch of the inspection sensor to point it towards areas where the UAV's movement in the vertical direction is limited, e.g. near the root of the blade.

In embodiments, the method comprises the step of:
- controlling a focus setting of the inspection sensor (camera) in accordance with a distance measurement made by the distance sensor.

Given, in a camera, the relation between a lens position, or the position of a focusing ring, and focus setting or distance, the lens position can be set and controlled quickly by a mechanical drive turning the focusing ring, in accordance with the desired focus setting. From the control point of view, this is an open loop control arrangement, with the distance as input and the focus setting as output. Nevertheless, there can there can be a local, closed control loop for turning the focusing ring to a set point. This arrangement allows to control the focus faster and in a more precise manner than with through-the-lens optical autofocusing.

In embodiments, the method comprises the steps of:
- determining a relative position of the inspection sensor (such as a camera) to the blade by means of the distance sensor;
- from this relative position and from a computer model of the blade, determining for a point of focus on the blade, the distance of this point of focus to the inspection sensor;
- controlling a focus setting of the inspection sensor (or camera) to correspond to the distance of this point of focus.

The point of focus is a point of interest that should be in focus when capturing an image. This can be a point on a particular line along the blade, such as a seam line or one of the edges. It can also be a location at which a deviation is expected to be, e.g. based on information from a previous inspection mission. In the event that the distance sensor does not provide a distance to the point of focus, the distance can be extracted from the computer model of the blade and the pose of the UAV or the inspection sensor. The accuracy of this distance can be increased by determining the relative position of the inspection sensor or camera to the blade by means of the distance sensor. This relative position can be a position in 3D space, or in two dimensions in a plane, or just one distance measurement. Depending on which it is, the relative position maintained in the computer model can be corrected in one or more dimensions.

The unmanned aerial vehicle for acquiring sensor data related to a wind turbine is programmed to perform one or more of the method steps described herein.

In an embodiment, a computer program for acquiring sensor data related to a wind turbine is loadable into an internal memory of a digital computer or a computer system controlling the UAV, and comprises computer-executable instructions to cause one or more processors of UAV to execute method steps presented herein. In another embodiment, a computer program product comprises a computer readable medium having the computer-executable instructions recorded thereon. The computer readable medium preferably is non-transitory; that is, tangible. In still another embodiment, the computer program is embodied as a reproducible computer-readable signal, and thus can be transmitted in the form of such a signal. The executing of the method can involve the computer program interacting with a user, by means of output devices such as a display, printer, etc. and input devices such as a keyboard, pointing device, touchscreen, etc.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, which schematically show:
- Figure 1: a wind turbine and a reference flight path;
- Figure 2: a UAV;
- Figure 3: correcting the pose of a distance sensor within a computer model of the turbine;
- Figure 4: deriving an actual flight path from a reference flight path;
- Figure 5: focussing a camera onto a point of focus point on a turbine blade;
- Figure 6: enhanced sensor data captured by the UAV; and
- Figure 7: enhanced sensor data displayed on a display device.

In principle, identical parts are provided with the same reference symbols in the figures.

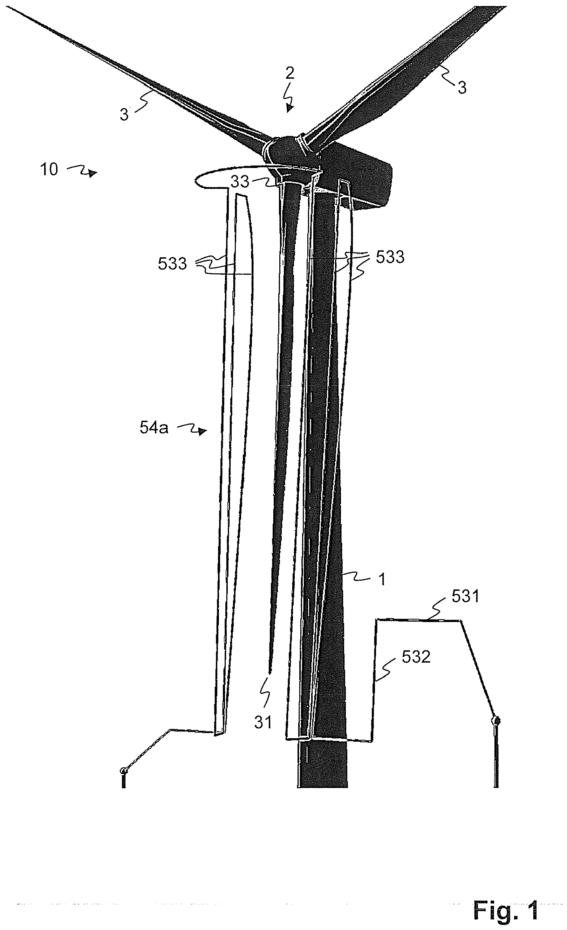

**Figure 1** schematically shows a wind turbine 10 comprising a tower 1 supporting a nacelle enclosing a drive train driving an electrical generator via a gearbox. Turbine blades 3 are arranged on a hub to form a rotor 2 driving the drive train.

Each blade 3 is typically secured at its root end 32, and then "spans" radially "outboard" to a free end or tip 31. The distance from the tip 31 to the root 32, at the opposite end of the blade 3, is called the "span." The front, or leading edge 33 of the blade 3 connects the forward-most points of the blade 3 that first contact the air. The rear, or trailing edge 34 of the blade 3 is where airflow that has been separated by the leading edge 33 rejoins after passing over a suction surface or side 35 and a pressure surface or side 36 of the blade.

A "chord line" connects the leading and trailing edges of the blade 3 in the direction of the typical airflow across the blade. The length of the chord line is called the chord Since many blades 10 change their chord over the span, the chord length is referred to as the "root chord," near the root, and the "tip chord," near the tip of the blade. The chord lines are arranged in the "chord planes" that extend through the streamlines on the corresponding pressure and suction surfaces of the blade.

**Figure 1** also shows a reference flight path 54a. The reference flight path 54a can be generated from a generic flight path 53 by scaling it according to the actual dimensions, expressed by a set of parameters, of the turbine 10 to be inspected. For example, the parameters can comprise
- tower height
- tower diameter
- distance from tower to blade center
- blade length
- blade tilt angle

The flight path shows a first section 531 in which the UAV 4 flies to a height at which both the tower 1 and blade 3 are expected to be visible in a horizontal scan by the distance sensor 44. If they are indeed visible, and in the right relative arrangement, the inspection proceeds along the flight path. In a second section, 532 the UAV 4 slowly descends, continuously scanning at least the blade 3 with the distance sensor 44, with an at least approximately horizontal scanning plane 48, until the blade 3 is no longer detected. This means that the UAV 4 has moved past the tip 31, and the height of the UAV 4 above ground or relative to the turbine 10 can be calibrated. The height of the tip 31 relative to the UAV 4 can be located by the distance sensor 44 more precisely by moving the UAV 4 up or down, or by controlling the pitch of the gimbal 41, thereby rotating the measurement plane or scanning plane 48 of the distance sensor 44.

The flight path shows several sections 533 along which the UAV 4 moves along the span of the blade 3 on vertical paths, upward or downward. Each such vertical section covers the span of the blade 3, and thus images taken along one section cover one circumferential section of the blade. The vertical sections are arranged around the blade 3, and so the images 6 from all vertical sections together can provide a complete view of the surface of the blade 3.

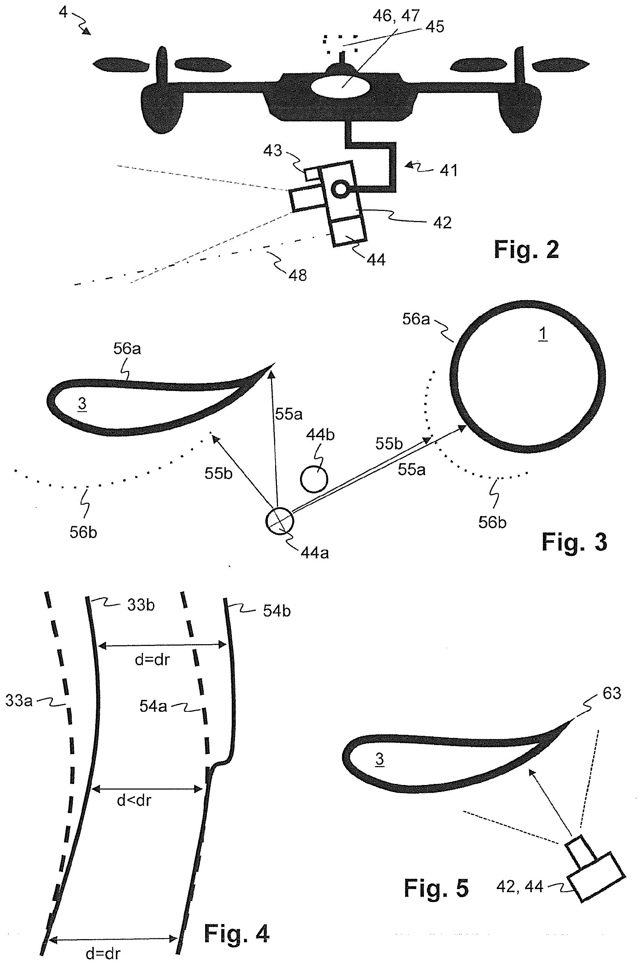

**Figure 2** schematically shows an unmanned aerial vehicle (UAV) 4, such as a multicopter, as it can be used in embodiments of the invention. It carries an inspection sensor 42 suspended by gimbal 41, rotatable about at least two or three Euler angles. The inspection sensor 42 typically is an optical camera and shall henceforth be referred to as such. However, other types of inspection sensors can be envisioned, such as devices operating in the non-optical ranges of the electromagnetic spectrum, range sensors etc. The camera 42 comprises a focus drive 43 for changing a focus setting of the camera lens.

Attached and moved with the inspection sensor (camera) 42 is a distance sensor 44. In other embodiments, the distance sensor 44 is attached to and moved with a main body of the UAV 4 and not the gimbal 41. The distance sensor 44 can be able to generate a 2D depth map or a linear sequence of distance measurements from scanning distances within a scanning plane 48. Most exemplary embodiments described herein will be based on the latter. A 2D depth map comprises 3D information in that it comprises a 2D array of data, wherein the data indicates the distance from a point (such as a sensor) or in general also from a plane.

The UAV 4 comprises a GPS 45 module and/or a further sensor 46, such as inertial sensor, gyroscope, barometer and/or compass. A flight controller 47 is arranged to integrate data from the GPS 45 and/or further sensor 46 and the distance sensor 44, and a computer model of an object to be inspected, such as a wind turbine 10, and to generate flight commands such as position or speed vectors to be executed by the UAV 4. This can be done by, at a given time and location, determining the pose of the UAV 4, comparing it to the pose according to the reference path, and calculating flight commands based on current pose, velocity and acceleration information to move the UAV to a next pose along the reference path at a future point in time. The reference path and the next pose typically includes reference speed vectors.

**Figure 3** illustrates a method for correcting the pose of the distance sensor 44 within the computer model. The figure shows a section through the tower 1 and the blade 3 to be inspected, the section plane being the scanning plane 48 of the distance sensor 44 at its current pose. Typically the scanning plane 48 is horizontal, but it can also be tilted, and this can be taken into account when computing the section. The solid lines show where, within the computer model, the tower 1 and the blade 3 are located in relation to the distance sensor. These are their expected positions, and constitute a reference distance map 56a as seen from the distance sensor at its modelled position 44a relative to the tower 1 and blade 3. Actual measurements from the distance sensor 44 constitute an actual distance map 56b, indicated by crosses, in their relation to the position of the distance sensor 44. If there is a mismatch, as illustrated, this means that the expected position 44a, as represented in the computer model, is incorrect. In order to correct the sensor position, the actual distance map 56b can be matched with the reference distance map 56a and the sensor position corrected accordingly. For example, given the actual distance map 56b comprising a multitude of measurement points (i.e. the crosses), this set of measurement points can be translated and rotated to best match the part of the reference distance map 56a that is visible to the distance sensor 44. Translating and rotating the pose of the distance sensor 44 in the same way gives the corrected position 44b of the distance sensor 44.

In another embodiment, the reference and actual distance maps comprise only the distances from the distance sensor 44 to closest points on the tower 1 and the blade 3, as reference distances 55a and actual distances 55b, respectively. These distances can be used to triangulate the corrected position 44b of the distance sensor 44 relative to the tower 1 and blade 3. In this case, since the single distance measurements provide limited information, it is advantageous to have the blade 3 arranged with its tip 3 1 in its lowermost position, closest to the ground, i.e. in the standard configuration for inspection. This allows the distance sensor 44 to measure the distance to both the blade 3 and the tower 1 in horizontal sweep, from which distances the corrected position can be triangulated.

The distance maps and positions shown in Figure 3 are located within a plane that coincides with the plane in which the measurements of the distance sensor 44 take place, i.e. the measurement or scanning plane 48. This plane is generally normal to the direction of flight of the UAV 4, and typically horizontal where the UAV 4 moves in a vertical direction. The reference distance map 56a can be updated and adapted to the pose of the UAV 4 and the distance sensor 44, by determining the orientation of the scanning plane 48, and computing, in the computer model, the intersection of this plane with the modelled tower 1 and blade 3.

**Figure** 4 illustrates a method for deriving the actual flight path 54b from the reference flight path 54a. A reference relative position of the UAV 4 in relation to the blade 3 in this example is the distance between the UAV 4 and a curve on the blade 3. This curve can be the leading edge 33 of the blade 3, as shown in the example, or another edge, or the line on the surface of the blade 3 that is closest to the UAV 4, etc. The expected trajectory of this curve is denoted by 33a. This expected curve is either "explicit", that is, it is part of a computer model of the blade and can be derived from the computer model. Alternatively, the expected curve can be "implicit" in the reference flight path 54a, that is, if the UAV 4 follows the reference flight path 54a, it is expected to be at a constant distance from the expected curve. In both cases, it can happen that the actual curve deviates from the expected one.

In order to adapt the actual flight path 54b to such deviations, the UAV 4 determines a measured relative position of the UAV 4 in relation to the blade 3 and corrects its trajectory such that it follows a given reference relative position of the UAV 4 in relation to the blade 3. Generally, the reference relative position can be a position and/or time dependent function, and/or it can specify the relative position in two dimensions relative to the blade 3, in particular a cross section of the blade 3. In a simple implementation, the reference relative position is just a distance, in particular a constant distance. This is illustrated in Figure 4 by a reference distance dr that should be maintained between the actual flight path 54b and the curve, with expected trajectory 33a. With the UAV 4 moving upward, in the beginning, in the lower part of the figure, the distance d of the two equals the reference distance dr. Further up, the actual curve 33b on the blade 3 deviates from the expected trajectory 33a. This causes the distance d to become smaller than the reference distance dr. Further up, the flight controller 47 has modified the actual flight path 54b, moving it further away from the blade 3, controlling the actual distance d to match the reference distance dr.

Figure 5 illustrates a method for focussing the camera 42 onto a point on the blade 3 by integrating a distance measurement with data from the computer model. The distance sensor 44, drawn at the same location as the camera 42 for simplicity, measures the closest distance to the blade 3. Or, more generally, the relative location of the distance sensor 44 and thus also the camera 42 is determined as in the method illustrated in Figure 3 for correcting the pose of the distance sensor 44 within the computer model. Thereby, the relative position of the camera 42 to the blade 3 is determined or corrected. From this, the distance to any point of interest on the blade 3, called point of focus 63, can be computed. Given this distance, the focus setting of the camera 42 can be set, e.g. by a drive turning a focus ring of the camera lens.

This makes it possible to focus on locations on the blade 3 that could not be brought into focus rapidly and reliably by other means. For example, a naïve autofocussing method would focus on the centre of the image, along the line of sight of the camera (indicated by an arrow). This would potentially yield a sensor reading which is not optimally focussed on the target of inspection (e.g., a blurred image ).

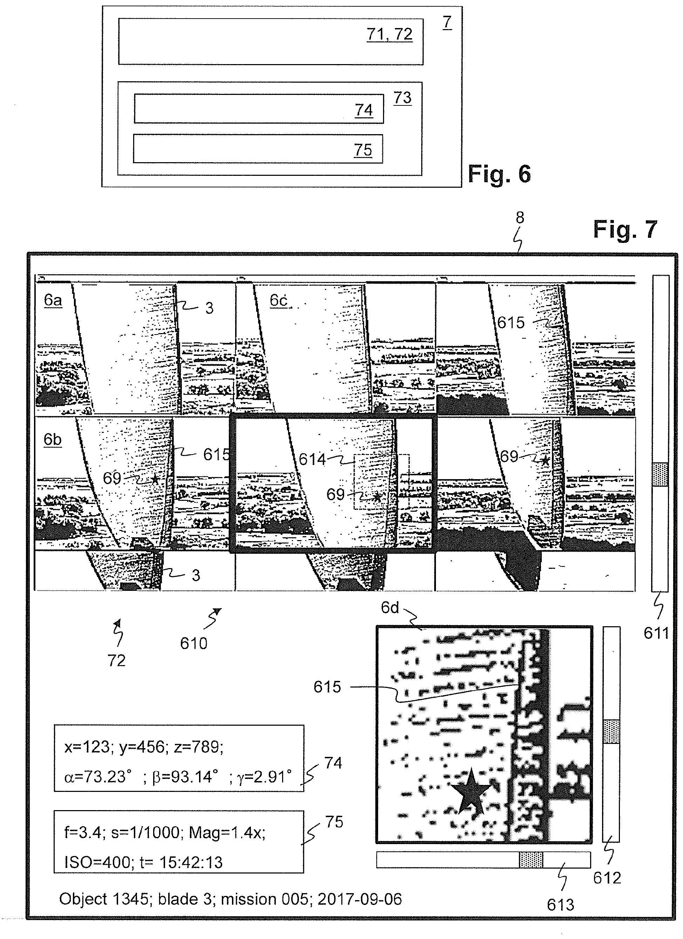

**Figure** 6 illustrates a sequence of sensor data 71, in this case a sequence of images or image data 72 and its relation to other data. The image data 72 are captured at regular spatial intervals as the UAV 4 moves along the blade 3, along essentially vertical sections of the actual flight path 54b, going up or down. Each image is stored as a set of enhanced sensor data 7, comprising the sensor data 71, in this case image data 72, together with sensor metadata 73. The sensor metadata 73 comprises sensor pose data 74 representing the pose of the camera 42 when the image was captured, and further metadata 75, typically generated by the camera 42. The enhanced sensor data 7 can be associated with a mission identifier, e.g. an string of characters, that uniquely identifies the inspection mission.

For a typical inspection mission covering one blade, with a resolution of ca. five Pixels per millimetre and with 30 MPixel per image, the image data 72 can use ca. 12 GB of computer storage.

**Figure** 7 shows the sequence of images 6 presented on a display device 8, arranged in a grid 610, with rows comprising images 6a, 6c taken at essentially the same height (along the span of the blade 3, assuming that the blade 3 is in a vertical position, pointing downward). Columns comprise images 6a, 6b of the same vertical section of the blade 3. In embodiments, there are one or more rows, and one or more columns. A vertical grid scroll element 611 is configured to, according to user input, scroll the one or more columns of the grid 610 vertically. In the Figure, the vertical scroll position is such that the lowermost row, showing the tip from different angles, is only partly displayed. A horizontal scroll element (not shown in the figure) can be present as well.

The images 6a, 6b, 6c show the blade 3 in front of a landscape, and on some images a deviation 69 being a defect is visible. In the present example, the deviations 69 or defects seen in the three images in the middle row all correspond to the same physical defect. In the lowermost row, the dark region corresponds to a patch created when the blade 3 was repaired.

For a user-selected image 6, indicated by a thick border, sensor pose data 74 and further sensor metadata 75 associated with the image is displayed. Further information such as sensor metadata 73 pertaining to all the images can also be shown on the display 8 in association with the images 6.

The user interface allows a user to select one of the images 6a, 6b, 6c for a magnified view, which is displayed as a magnified section 6d of the selected image. A zoom level or factor of magnification can be set by the user. The example shows a section of the image labelled 6c being magnified. The part in this "un-zoomed" image 6c that is being magnified is identified by a zoom frame 614. The magnified view comprises a vertical scroll element 612 and horizontal scroll element 613.

While the invention has been described in present embodiments, it is distinctly understood that the invention is not limited thereto, but may be otherwise variously embodied and practised within the scope of the claims.

## Claims

1. A method for acquiring sensor data related to a wind turbine, using an unmanned aerial vehicle (UAV) (4) comprising at least one inspection sensor (42) for acquiring the sensor data (71), the method comprising the steps of
• determining a reference flight path (54a) for the UAV (4);
• operating the UAV (4) to automatically fly along an actual flight path (54b) derived from the reference flight path (54a),
• acquiring, as the UAV (4) flies along one or more sections of the actual flight path (54b), with the inspection sensor (42), multiple sets of sensor data (71),
• storing each set of sensor data (71) in association with sensor pose data (74) that defines the pose of the inspection sensor (42) at the time at which the set of sensor data (71) was acquired.

2. The method of claim 1, wherein, for operating the UAV (4) to automatically fly along a actual flight path (54b), the following step is performed:
• determining at least one of the pose of the UAV (4) and the pose of the inspection sensor (42) by integrating data from at least one of a satellite navigation system (45) and an inertial navigation system (46) with data from a distance sensor (44) located on the UAV (4) and a computer model of at least part of the turbine (10).

3. The method of claim 2, wherein the data from the distance sensor (44) comprises an actual distance map (56b) comprising distance measurements at least in a plane intersecting the turbine (10), and comprising the steps of
• determining, from the computer model, a reference distance map (56a) comprising distances from the distance sensor (44) to at least one of the tower (1) and the blade (3) according to the pose of the distance sensor (44) within the computer model;
• correcting the pose of the distance sensor (44) within the computer model according to a geometric transformation that matches the actual distance map (56b) to the reference distance map (56a).

4. The method of claim 3, wherein the blade (3) is arranged with its tip (31) in its lowermost position, closest to the ground.

5. The method of claim 4, wherein the actual distance map (56b) comprises, in a horizontal plane, at least one of a distance from the distance sensor (44) to the tower (1) and a distance from the distance sensor (44) to the blade (3), in particular in each case the minimum distance.

6. The method of one of the preceding claims, comprising the step of
• determining the reference flight path (54a) by retrieving a parameterised generic flight path (53) and setting its parameters to parameters of an actual turbine to be inspected.

7. The method of claim 6, wherein the parameters define at least a root height, span and chord length of the blade (3), and optionally also a diameter of the tower (1) and a distance between the tower (1) and the blade (3), and optionally one or more of an angle of the blade relative to the vertical, a pitch angle of the blade, and a nacelle angle.

8. The method of one of the preceding claims, wherein the reference flight path (54a) comprises data defining at least one of a reference trajectory for the UAV (4) and a reference trajectory for the inspection sensor (42), and reference data defining the orientation of the inspection sensor (42)

9. The method of one of the preceding claims, wherein the reference flight path (54a) comprises an initialisation section with a plausibility check, the method comprising the steps of:
• flying the UAV (4) to a height above the height of the tip (31);
• determining, with a distance sensor (44), an actual distance map (56b) comprising distance measurements at least in a plane intersecting the turbine (10);
• verifying whether one section of the actual distance map (56b) can be matched with the blade (3) and another, separate section of the actual distance map (56b) can be matched with the tower (1), and that the relative arrangement of these two sections is as expected.

10. The method of one of the preceding claims, wherein the reference flight path (54a) comprises a height calibration section, the method comprising the steps of:
• flying the UAV (4) to a height above the height of the tip (31);
• determining, with a distance sensor (44), an actual distance map (56b) comprising distance measurements at least in a plane intersecting at least the blade (3);
• verifying whether one section of the actual distance map (56b) can be matched with the blade (3);
• controlling the UAV (4) to reduce its height, continuously repeating the steps of determining the actual distance map (56b) and verifying the presence of the blade (3) until the blade (3) is no longer detected, this indicating that UAV (4) is in reality at the height of the tip (31);
• correcting a modelled height of the UAV (4) within a computer model that comprises a pose of the UAV (4) to correspond to the height of the tip (31).

11. The method of one of claims 2 to 10, wherein the actual flight path (54b) is derived from the reference flight path (54a) by the steps of, repeatedly at points in time following each other:
• inputting the reference flight path (54a), a reference relative position of the UAV (4) in relation to the blade (3), and a measured relative position of the UAV (4) in relation to the blade (3),
• determining the actual flight path (54b) as a deviation from the reference flight path (54a) that reduces or eliminates a difference between the reference and the measured relative position of the UAV (4) in relation to the blade (3).

12. The method of claim 11, wherein the reference and the measured relative position are one of
• a relative position in 3D space;
• a relative position in a plane, defined in the two dimensions spanned by the plane;
• a distance, such as the distance to the closest point on the blade (3), or to a distinctive point of the blade (3) such as the leading edge (33) or the trailing edge (34).

13. The method of one of the preceding claims, comprising the step of:
• controlling an orientation of the inspection sensor (42) to centre its field of view on a section of the blade (3) being inspected, in particular by controlling a horizontal orientation (yaw) of the inspection sensor (42).

14. The method of one of the preceding claims, comprising the step of:
• controlling a focus setting of the inspection sensor (42) in accordance with a distance measurement made by the distance sensor (44).

15. The method of claim 14, comprising the steps of:
• determining a relative position of the inspection sensor (42) to the blade (3) by means of the distance sensor (44);
• from this relative position and from a computer model of the blade (3), determining for a point of focus (63) on the blade (3), the distance of this point of focus (63) to the inspection sensor (42);
• controlling a focus setting of the inspection sensor (42) to correspond to the distance of this point of focus (63).

16. An unmanned aerial vehicle (UAV) (4) for acquiring sensor data related to a wind turbine, comprising at least one inspection sensor (42) for acquiring the sensor data (71), the UAV (4) being programmed to perform the steps of
• determining a reference flight path (54a) for the UAV (4);
• operating the UAV (4) to automatically fly along an actual flight path (54b) derived from the reference flight path (54a),
• acquiring, as the UAV (4) flies along one or more sections of the actual flight path (54b), with the inspection sensor (42), multiple sets of sensor data (71),
• storing each set of sensor data (71) in association with sensor pose data (74) that defines the pose of the inspection sensor (42) at the time at which the set of sensor data (71) was acquired.
